# EUROPEAN PATENT SPECIFICATION

(11) **EP 3 379 717 B1**
(45) Date of publication and mention of the grant of the patent: **28.07.2021**
(21) Application number: 18159620.6
(22) Date of filing: 02.03.2018
(51) Int. Cl.: H02P 9/10, H02P 9/00, H02H 7/12, H02H 9/04, H02H 7/09

(54) **VARIABLE-SPEED PUMPED STORAGE POWER SYSTEM AND VARIABLE-SPEED PUMPED STORAGE POWER METHOD**
DREHZAHLVARIABLES PUMPSPEICHERKRAFTWERK UND DREHZAHLVARIABLES PUMPSPEICHERKRAFTVERFAHREN
SYSTÈME ET PROCÉDÉ D'ALIMENTATION DE STOCKAGE PAR POMPAGE À VITESSE VARIABLE

(30) Priority: 24.03.2017 JP 2017060074; 01.02.2018 JP 2018016518
(43) Date of publication of application: 26.09.2018
(73) Proprietor: Kabushiki Kaisha Toshiba, Minato-ku, Tokyo 105-8001 (JP); Toshiba Energy Systems & Solutions Corporation, Saiwai-ku Kawasaki-shi Kanagawa 2120013 (JP)
(72) Inventor: Ishizuki, Teruyuki, Tokyo, 105-8001 (JP); Kageyama, Takashisa, Tokyo, 105-8001 (JP); Hasegawa, Ryuta, Tokyo, 105-8001 (JP); Mori, Junji, Tokyo, 105-8001 (JP)
(74) Representative: AWA Sweden AB

(56) References cited:
- EP-A1- 2 830 176
- EP-A1- 2 905 858
- EP-A2- 2 518 891
- WO-A1-2013/071937
- CN-A- 102 522 777
- CN-A- 106 150 900
- CN-B- 102 999 675
- JP-A- H08 317 694
- JP-A- H11 215 896
- JP-A- 2007 236 059
- JP-B2- 3 100 805
- SU-A1- 1 584 058
- US-A- 4 041 543
- XIAN-YONG XIAO ET AL: "Integrated DFIG Protection With a Modified SMES-FCL Under Symmetrical and Asymmetrical Faults", IEEE TRANSACTIONS ON APPLIED SUPERCONDUCTIVITY., vol. 28, no. 4, 1 June 2018 (2018-06-01), pages 1-6, XP055516612, US ISSN: 1051-8223, DOI: 10.1109/TASC.2018.2802782

## Description

Embodiments described herein relate generally to a variable-speed pumped storage power system and a variable-speed pumped storage power method.

A variable-speed pumped storage power system using a doubly-fed alternator is equipped with overvoltage suppression devices for suppressing an overvoltage in a secondary circuit generated when a grid system failure or the like has occurred, and protecting main circuit devices such as a generator-motor and a converter from the overvoltage. For example, there are provided an overvoltage suppression device which uses a series circuit of a self-excitation element such as an IGBT and resistors (referred to as a chopper, a clipper, or the like), and an overvoltage suppression device which uses a large-current and short-time rating short-circuit device by a large-capacity semiconductor element such as a thyristor to cope with the occurrence of a higher fault current. These devices detect the overvoltage in a generator-motor secondary circuit and then activate the overvoltage suppression device, thereby suppressing the overvoltage in this circuit and protecting instruments which are connected to this circuit from the overvoltage.

Devices for short circuiting are for example disclosed in EP 2 905 858 A1, JP H08 317694 A, CN 102 999 675 B, US 4 041 543 A, and WO 2013/071937 A1.

The variable-speed pumped storage power system enables the following function: when the overvoltage suppression device using the short-circuit device is activated due to, for example, the occurrence of a grid system failure at a portion near the interconnection point with the grid system, a switching element of an inverter of a secondary exciter is operated so that a DC voltage of the inverter is applied as a reverse voltage to the thyristor constituting the short-circuit device of the overvoltage suppression device if a certain condition is satisfied after the activation of the overvoltage suppression device, whereby the current flowing through the thyristor is brought to zero to forcibly turn off the thyristor so that the overvoltage suppression device is freed from the short-circuit state early, and the operation of the secondary exciter is resumed and the variable-speed pumped storage power system is restored at high speed without being stopped. Hereinafter, control to perform this function will be referred to as "reset control" of the overvoltage suppression device.

To meet the recent needs for the increase of the single unit capacity of the variable-speed pumped storage power system and for the continuation of operation connecting with the grid system even when a grid system failure has occurred at a portion near the interconnection point, it is necessary to perform reset control more quickly than before and resume the operation by the converter. Accordingly, there has been suggested an overvoltage suppression device in which resistors indented for current attenuation are connected in series to a thyristor short-circuit device for the purpose of early attenuation of a fault current flowing into the generator-motor secondary circuit.

However, in this case, the resistor-equipped overvoltage suppression device (including a chopper provided in a DC link circuit comprising series connection of a self-excitation semiconductor element such as an IGBT and resistors, and a clipper which suppresses an overvoltage of a three-phase circuit by a resistor-equipped three-phase thyristor short-circuit device provided in the generator-motor secondary circuit, or the series connection of a self-excitation semiconductor element such as an IGBT and resistors via a rectifier to a three-phase circuit of the generator-motor secondary circuit) operates to rapidly attenuate the fault current in the generator-motor secondary circuit by the resistors but also rapidly attenuate an AC component induced in a generator-motor primary circuit. Therefore, if a DC component of a fault current on a side of the generator-motor primary circuit is great depending on the occurrence timing of a grid system failure, the DC component may be greater than the AC component when a breaker is opened, and there is a possibility that the current cannot pass a zero point and a parallel-in circuit breaker or a breaker positioned closer to the grid-system may cause a DC-interruption and may be damaged.

Under the circumstances, it is desired to provide a safe variable-speed pumped storage power system and a variable-speed pumped storage power method, which ensure the continuity of operation connecting the variable-speed pumped storage power system with a grid system even when a grid system failure has occurred, and which prevent a DC-interruption by a breaker. The invention is described in the appended claims.

According to one embodiment, there is provided a variable-speed pumped storage power system provided with an overvoltage suppression device, which is connected to i) a three-phase circuit between an AC exciter and a rotor winding of a doubly-fed variable-speed generator-motor having a stator winding connected to a low-voltage side power source of a transformer whose high-voltage side is connected to a grid system, or to ii) a DC link circuit in the AC exciter, and which is configured to execute short-circuiting one of the circuits via a resistor when an overvoltage has occurred in the one of the circuits. The variable-speed pumped storage power system comprises: a high-voltage side circuit voltage detector configured to detect a voltage of a high-voltage side circuit of the transformer; a no-resistor short-circuit device which is connected between the rotor winding and the AC exciter and is capable of executing three-phase short-circuiting in the three-phase circuit; and a controller configured to cause the short-circuit device to execute three-phase short-circuiting on a condition that an output voltage of the high-voltage side circuit voltage detector becomes lower than a predetermined value.

The invention can be more fully understood from the following detailed description when taken in conjunction with the accompanying drawings, in which:
FIG. 1 is a diagram showing the overall configuration of a power system including a variable-speed pumped storage power system according to an embodiment;
FIG. 2 is a configuration diagram mainly showing a functional configuration related to a DC-interruption prevention device of the variable-speed pumped storage power system according to the embodiment;
FIG. 3 is a diagram showing an example of an internal configuration of a DC-interruption avoidance control device in FIG. 2;
FIG. 4 is a graph showing a current waveform example observed at a generator-motor primary circuit according to a conventional technique in which the breaker of the generator-motor primary circuit causes a DC-interruption upon the occurrence of a fault; and
FIG. 5 is a graph showing a current waveform example observed at a generator-motor primary circuit according to the present embodiment in which a DC-interruption prevention device is applied so as not to cause a DC-interruption upon the occurrence of a fault.

Hereinafter, embodiments will be described with reference to the accompanying drawings.

### (First Embodiment)

Initially, a first embodiment is described.

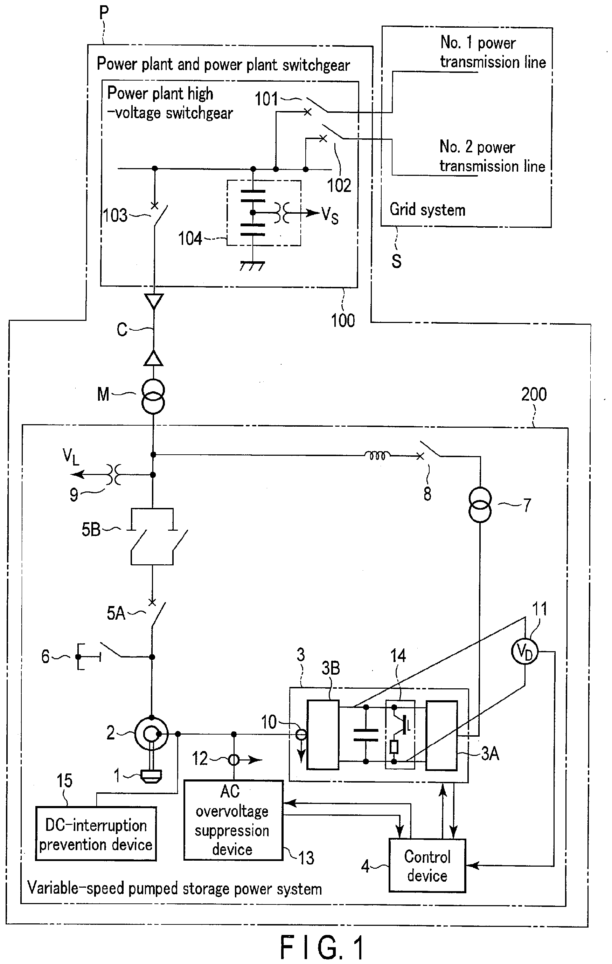

FIG. 1 is a diagram showing the overall configuration of a power system including a variable-speed pumped storage power system according to the first embodiment.

As shown in FIG. 1, a power plant and a power plant switchgear P comprise a power plant high-voltage switchgear 100 connected to a grid system S, and a variable-speed pumped storage power system 200 connected to the power plant high-voltage switchgear 100 via a power cable C and a main transformer M. A low-voltage side of the main transformer M is equivalent to an internal circuit of the power plant. In addition, the main transformer M may be configured as a part of the variable-speed pumped storage power system.

The power plant high-voltage switchgear 100 comprises breakers 101 and 102 which respectively open and close power lines connected to, for example, a No. 1 power transmission line and a No. 2 power transmission line on the side of the grid system S, and comprises a breaker 103 which opens and closes a power line connected to a power cable C on the high-voltage side of the main transformer M, and further comprises a high-voltage side circuit voltage detector 104 which detects a voltage of a high-voltage side circuit of the main transformer M.

The variable-speed pumped storage power system comprises a pump turbine 1; a variable-speed generator-motor 2 obtained by a doubly-fed alternator; a self-excitation secondary exciter 3 (which may be referred to as an "AC exciter 3" or a "self-excitation converter 3") including a converter 3A and an inverter 3B obtained by a frequency converter which is connected to a secondary winding of the variable-speed generator-motor 2 and which applies a variable-frequency AC; a control device 4 which controls an AC voltage, a current, a frequency, and a phase output by the secondary exciter 3 and which controls the opening/closing of a parallel-in circuit breaker 5A and a phase inversion disconnector 5B; the parallel-in circuit breaker 5A and the phase inversion disconnector 5B used for connection of a stator winding side of the variable-speed generator-motor 2 to the grid system S; a start/brake disconnector 6 which causes three-phase short-circuiting at a stator winding terminal of the variable-speed generator-motor 2; an excitation transformer 7 which supplies AC power to be used by the secondary exciter 3; an excitation breaker 8 which interrupts AC power supplied to the excitation transformer 7; a primary circuit voltage detector (instrument transformer) 9 which measures a voltage of a generator-motor primary circuit on the stator winding side of the variable-speed generator-motor 2; a secondary circuit current detector 10 which measures a current flowing through the generator-motor secondary circuit on the rotor winding side of the variable-speed generator-motor 2; a secondary circuit voltage detector 11 which measures a voltage of the generator-motor secondary circuit on the rotor winding side of the variable-speed generator-motor 2 or a DC link voltage of the secondary exciter 3; a current detector 12 which measures a three-phase short-circuit current in the generator-motor secondary circuit on the rotor winding side of the variable-speed generator-motor 2; an AC overvoltage suppression device 13 using a resistor-equipped large-current and short-time rating short-circuit device by a large-capacity semiconductor element such as a thyristor and resistors; and a DC overvoltage suppression device 14 called a chopper using a self-excitation semiconductor element such as an IGBT and resistors, and others.

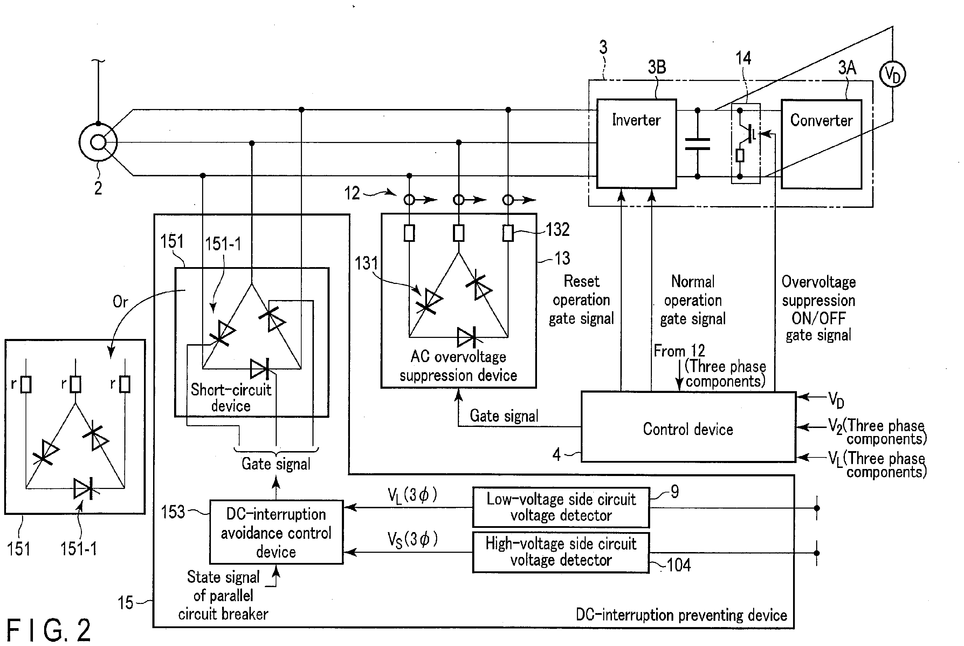

FIG. 2 is a configuration diagram mainly showing a functional configuration related to a DC-interruption prevention device of the variable-speed pumped storage power system according to the present embodiment. The same reference numbers are given to the same components as those in FIG. 1.

The AC overvoltage suppression device 13 constitutes a resistor-equipped short-circuit device comprising thyristors 131 each connected between phases of a secondary winding of the variable-speed generator-motor 2, resistors 132 inserted between lines, and the current detector 12 which detects currents of the thyristors 131. When a line-to-line voltage V2 of a secondary side AC circuit of the generator-motor or a voltage VD of the DC link circuit of the secondary exciter 3 exceeds a predetermined value, a gate signal which controls the firing of each of the thyristors 131 is applied to the AC overvoltage suppression device 13 from the control device 4.

On the other hand, when the voltage VD of the DC link circuit exceeds the predetermined value, an ON gate signal which fires a self-excitation element such as an IGBT is applied to the DC overvoltage suppression device 14 from the control device 4, and when the voltage VD is less than or equal to the predetermined value as a result of the above operation, an OFF gate signal is applied to the DC overvoltage suppression device 14.

When both the AC overvoltage suppression device 13 and the DC overvoltage suppression device 14 are provided, the DC overvoltage suppression device 14 operates at a lower set value, and when the position of a grid system failure is far from the power plant or when a fault aspect is a single-phase ground fault and a fault current is relatively low, the DC overvoltage suppression device 14 suppresses a voltage rise to a voltage range in which the converter 3 is operable, and the normal operation of the generator-motor by the converter 3 is continued. A set value of the AC overvoltage suppression device 13 is set so that the AC overvoltage suppression device 13 operates when a voltage further rises even when the DC overvoltage suppression device 14 operates.

For example, let us assume that a three-phase short-circuit fault has occurred in a grid system at a portion near the interconnection point during a normal operation, voltage increase cannot be suppressed only by the operation of the DC overvoltage suppression device 14, and a line-to-line voltage V2 of the secondary side three-phase AC circuit of the variable-speed generator-motor 2 or a voltage VD of the DC link circuit exceeds a value predetermined in the AC overvoltage suppression device 13. In this case, the control device 4 stops supply of a normal operation gate signal supplied for the normal operation, supplies an ON gate signal to the AC overvoltage suppression device 13, and operates the three-phase short-circuit device by the thyristors 131.

When the AC overvoltage suppression device 13 operates, a fault current is quickly attenuated by the effect of the resistors 132 provided in a circuit of a three-phase short-circuit device by the thyristors 131, and when a current to the three-phase short-circuit device detected by the current detector 12 has become less than or equal to an operable current of the inverter 3B, a reverse current is applied to the thyristors 131 from the inverter 3B based on the reset control by the control device 4 (based on a reset operation gate signal supplied from the control device 4) to forcibly turn off the three-phase short-circuit device, and the normal operation of the generator-motor by the converter 3 is resumed. At this time, the control device 4 may perform the reset control on the AC overvoltage suppression device 13, for example, on a condition that the voltage of each phase of the low-voltage side circuit of the main transformer M (hereinafter "voltage VL") exceeds a predetermined value, from the viewpoint of obviating flowing of a current that may damage a circuit of, for example, the three-phase short-circuit device including a semiconductor element when the reset control is performed.

Accordingly, even when a fault with a high fault current such as a grid system failure at a portion near the interconnection point occurs, the generator-motor can be kept in operation without being stopped for protection.

However, as described above, because the resistors 132 are provided in the circuit of the short-circuit device of the AC overvoltage suppression device 13, the time constant of the generator-motor secondary circuit of the variable-speed generator-motor 2 is lower and an AC component of the generator-motor primary circuit attenuates extremely early when a grid system failure has occurred. Accordingly, a transient DC component may be increased depending on the occurrence timing of the grid system failure, and the fault current would not pass a zero point, resulting in failure of current interruption when the breaker 101, 102, or 103 positioned closer to the grid system or the parallel-in circuit breaker 5A in the power plant interrupts the fault current. In this case, the breaker may be damaged.

To cope with such problems, a DC-interruption prevention device 15 is equipped with a short-circuit device 151 which is capable of executing three-phase short-circuiting in the three-phase circuit without any resistor by thyristors 151-1 each connected between phases of a secondary winding of the variable-speed generator-motor 2, the high-voltage side circuit voltage detector 104 which detects a voltage Vs of the high-voltage side circuit of the main transformer M and the low-voltage side circuit voltage detector 9 (corresponding to the aforementioned primary circuit voltage detector 9) which detects a voltage VL of the low-voltage side circuit of the main transformer M, and a DC-interruption avoidance control device (controller) 153. It is to be noted that the DC-interruption avoidance control device 153 may be provided in the control device 4, instead of being provided in the DC-interruption prevention device 15.

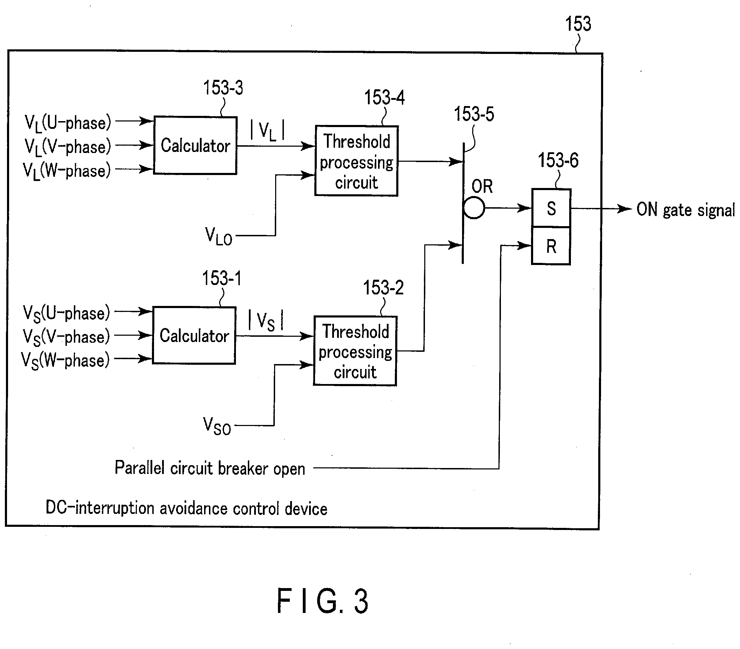

An example of an internal configuration of the DC-interruption avoidance control device 153 of the DC-interruption prevention device 15 in FIG. 2 is shown in FIG. 3.

The DC-interruption avoidance control device 153 inputs a three-phase voltage on the high-voltage side of the main transformer obtained by the high-voltage side circuit voltage detector 104, finds a voltage vector in a calculator 153-1, and outputs the magnitude of the voltage vector to a threshold processing circuit 153-2. The threshold processing circuit 153-2 sets, for example, a voltage value required in a specification for operation continuity with the grid system S, if any, as a threshold of this voltage, and outputs a signal (e.g., a signal having a value "1") which instructs to operate the short-circuit device 151 of the DC-interruption prevention device 15 when the magnitude of the voltage vector is smaller than the threshold.

In this example, a three-phase voltage of the low-voltage side circuit of the main transformer M obtained by the low-voltage side circuit voltage detector 9 is further input, a voltage vector is found in a calculator 153-3, and the magnitude of the voltage vector is output to a threshold processing circuit 153-4. The threshold processing circuit 153-4 sets, as a threshold VL0, a voltage value of the low-voltage side circuit corresponding to the voltage value of the high-voltage side circuit of the main transformer M required in, for example, a specification for operation continuity with the grid system S, and outputs a signal (e.g., a signal having a value "1") which instructs to operate the short-circuit device 151 of the DC-interruption prevention device 15 when the magnitude of the voltage vector is smaller than the threshold.

An OR circuit 153-5 outputs an ON gate signal to the short-circuit device 151 of the DC-interruption prevention device 15 from the DC-interruption avoidance control device 153 if at least one of the two outputs is "1", so that the thyristors are brought to a conducting state, and the generator-motor secondary circuit is short-circuited without any resistor. This operation is much earlier than the operation to interrupt the fault current by the breaker 103 or 5A, and can be performed substantially simultaneously with the operations of the overvoltage suppression devices 13 and 14.

In this operation, a current bypasses the interline resistors in the overvoltage suppression devices 13 and 14, so that it is possible to avoid the DC-interruption by preventing reduction of the time constant of the generator-motor secondary circuit, and ensuring an AC component which is sufficient for the fault current in the generator-motor primary circuit to pass the current zero point when the breaker 103 or 5A is opened.

Here, by setting each of the thresholds of the threshold processing circuits 153-2 and 153-4 to a voltage value requesting the continuation of the operation or a lower value, it is possible to ensure the operation continuity by the overvoltage suppression devices 13 and 14 having the resistor-equipped short-circuit devices when a grid system failure has occurred, and for a major fault of the fault current which does not require the continuation of operation, it is possible to cause the DC-interruption prevention device 15 having the no-resistor short-circuit device 151 to operate such that the DC-interruption of the breaker is avoided and the variable-speed pumped storage power system is safely stopped. Consequently, it is possible to implement the converter 3 having a proper capacity needed for the continuation of operation.

The ON gate signal of the short-circuit device of the DC-interruption prevention device 15 is reset by a circuit 153-6 in response to the disconnection of the parallel-in circuit breaker 5A, and can prepare for the next operation.

Furthermore, this embodiment is not limited to the case where the no-resistor short-circuit device 151 of the DC-interruption prevention device 15 has no resistor. There may be a case where the no-resistor short-circuit device 151 of the DC-interruption prevention device 15 has resistors with resistance that assures that the DC time constant of the generator-motor primary circuit during the operation of the short-circuit device is lower than the DC time constant of the generator-motor secondary circuit. Moreover, both delta connection and Y-connection are acceptable as long as the circuit configuration of the short-circuit device has a small resistor intervening between lines.

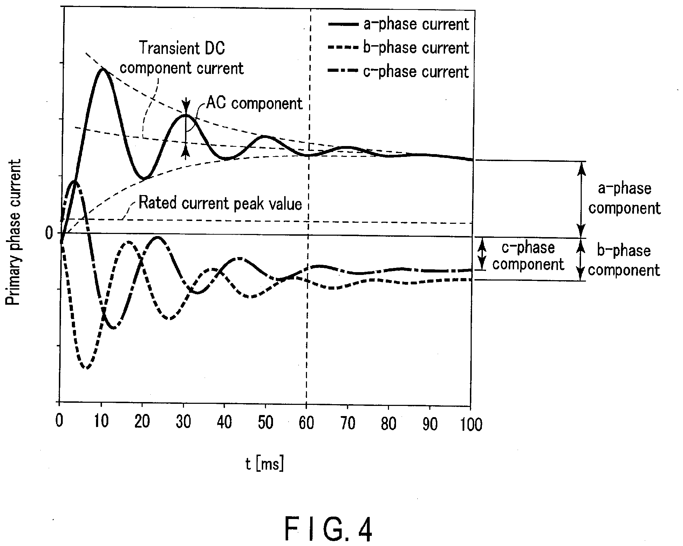

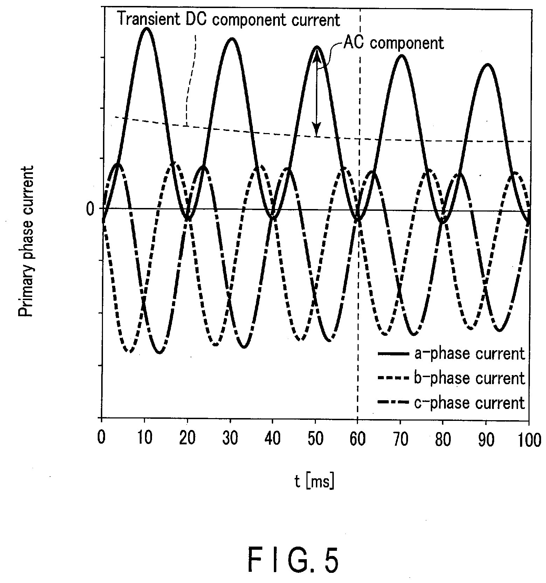

Now, a current waveform observed when a three-phase short-circuit fault has occurred in the low-voltage side circuit of the main transformer M and its advantageous effects are described with reference to FIG. 4 and FIG. 5 by the comparison of the present embodiment with a conventional technique.

FIG. 4 is a graph showing an example of a current waveform observed at the generator-motor primary circuit according to a configuration of the conventional technique in which the breaker of the generator-motor primary circuit causes a DC-interruption upon the occurrence of the three-phase short-circuit fault in the low-voltage side circuit of the main transformer M. By contrast, FIG. 5 is a graph showing an example of a current waveform observed at the generator-motor primary circuit according to the present embodiment in which the DC-interruption prevention device is applied so as not to cause a DC-interruption upon the occurrence of the three-phase short-circuit fault.

In each of the current waveform charts, an a-phase current, a b-phase current, and a c-phase current that constitute the current of the generator-motor primary circuit on the occurrence of the fault are shown. In addition, the vertical axis indicates the current of the generator-motor primary circuit, and the horizontal axis indicates time.

In the example of FIG. 4, after the occurrence of the fault, the current of the generator-motor primary circuit has a great attenuation amount of the AC component, and most of the AC component has already attenuated, for example, in five cycles of parallel-in circuit breaker shut-off timing. The remaining transient DC component current, which composes the current of the generator-motor primary circuit, does not pass the zero point, resulting in failure of current interruption.

Here, the a-phase current is observed. A current for the a-phase component is much higher than a rated current peak value, does not pass the zero point, and cannot be safely interrupted. If the a-phase current is interrupted, the direct-current is interrupted, and the breaker is damaged. The same also applies to the b-phase current and the c-phase current.

For example, when the parallel-in circuit breaker 5A is specified to open at a point of 100 [ms], the current of each phase does not pass the zero point before this point. Moreover, when the breaker 101, 102, or 103 positioned closer to the grid system are specified to open within three cycles (60 [ms]) after the fault in the case of a grid system failure, the current of each phase does not pass the zero point before this point. There is concern that a DC-interruption may occur and the breaker may be damaged unless the current crosses the zero point, but the example of FIG. 4 cannot cope with such a problem.

In contrast, in the example of FIG. 5, after the occurrence of the fault, the current of the generator-motor primary circuit has a small attenuation amount of the AC component, and the AC component hardly attenuates, for example, even in five cycles of the parallel-in circuit breaker shut-off timing. This is because the current bypasses the interline resistors in the overvoltage suppression devices 13 and 14 due to the effect of the DC-interruption prevention device 15, so that the time constant of the generator-motor secondary circuit is increased, and the attenuation of the AC component is delayed. As a result, the DC component can be kept greater than the AC component because attenuation of the AC component is delayed. This ensures that all of the a-phase current, the b-phase current, and the c-phase current of the current of the generator-motor primary circuit can pass the zero point, so that the DC-interruption can be avoided, while current interruption can be successful.

As described above, for example, even when the breaker positioned closer to the grid system are specified to open within three cycles (60 [ms]) after the fault in the case of a grid system failure, the current of each phase passes the zero point more than once before this point in the example of FIG. 5, so that it is possible to safely perform current interruption without damaging the breakers.

Although the DC-interruption avoidance control device 153 causes the short-circuit device 151 to execute three-phase short-circuiting on a condition that at least one of the output voltage of the high-voltage side circuit voltage detector 104 and the output voltage of the low-voltage side circuit voltage detector 9 becomes lower than each predetermined value in the example shown in the embodiment described above, this example is not restrictive.

For example, without the use of the low-voltage side circuit voltage detector 9, the short-circuit device 151 may be caused to execute three-phase short-circuiting on a condition that the output voltage of the high-voltage side circuit voltage detector 104 becomes lower than the predetermined value. Alternatively, without the use of the high-voltage side circuit voltage detector 104, the short-circuit device 151 may be caused to execute three-phase short-circuiting on a condition that the output voltage of the low-voltage side circuit voltage detector 9 becomes lower than the predetermined value.

Furthermore, and not part of the invention, a current of a rotor winding of the variable-speed generator-motor 2 may be used instead of the output voltage of the high-voltage side circuit voltage detector 104 and the output voltage of the low-voltage side circuit voltage detector 9 to determine whether or not a condition that the short-circuit device 151 is caused to execute three-phase short-circuiting is satisfied. Alternatively, a current of a stator winding side circuit may be used. In this case, for example, a rotor winding current detector which detects the current of the rotor winding or a stator winding current detector which detects the current of the stator winding side circuit can be provided so that the short-circuit device 151 is caused to execute three-phase short-circuiting on a condition that the current detected by the rotor winding current detector or the stator winding current detector is not less than or equal to each prescribed current value.

Further yet, information or a signal indicating the occurrence place of a fault may be used instead of the output voltage of the high-voltage side circuit voltage detector 104 and the output voltage of the low-voltage side circuit voltage detector 9 to determine whether or not a condition that the short-circuit device 151 is caused to execute three-phase short-circuiting is satisfied. In this case, for example, the short-circuit device 151 may be caused to execute three-phase short-circuiting on a condition that there is no operation of a predetermined protective relay.

As has been described above in detail, according to the embodiment, it is possible to provide a safe variable-speed pumped storage power system, which ensures the continuity of operation connecting the variable-speed pumped storage power system with the grid system even when a grid system failure has occurred, and which prevents a DC-interruption by a breaker.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims are intended to cover such forms or modifications as would fall within the scope of the inventions.

## Claims

1. A variable-speed pumped storage power system (200) connected to a grid system (S) by at least one circuit breaker (101, 102, and/or 103) via a transformer (M), and provided with a doubly-fed variable-speed generator-motor (2) having a stator winding connected to a low-voltage side of the transformer (M) via a parallel-in circuit breaker (5A), a high-voltage side circuit voltage detector (104), a low-voltage side circuit voltage detector (9) and
i) an AC overvoltage suppression device connected a three-phase circuit between an AC exciter (3) and a rotor winding of the doubly-fed variable-speed generator-motor (2), and / or
ii) a DC overvoltage suppression device connected a DC link circuit in the AC exciter (3), respectively
and which are configured to execute short-circuiting of the connected circuits via resistors when an overvoltage has occurred in the at least one of the connected circuits,
**characterized in that** the variable-speed pumped storage power system comprises a DC-interruption prevention device (15) so as to avoid a DC-interruption at any of said circuit breakers upon the occurrence of a fault, wherein the DC-interruption prevention device at least comprises:
a short-circuit device (151) which is connected to the three-phase circuit between the rotor winding and the AC exciter (3) and is arranged to execute three-phase short-circuiting of the connected circuit; and
a controller (153) configured to cause the short-circuit device (151) to execute three-phase short-circuiting on a condition that at least one of an output voltage of the high-voltage side circuit voltage detector (104) and an output voltage of the low-voltage side circuit voltage detector (9) becomes lower than a respective predetermined value.

2. A variable-speed pumped storage power system (200) according to claim 1, wherein the DC-interruption prevention device (15) comprises
instead of the short-circuit device (151) which is capable of executing three-phase short-circuiting of the connected circuit
a short-circuit device (151) which is connected to the three phase circuit between the rotor winding and the AC exciter (3) and is capable of executing three-phase short-circuiting of the connected circuit via resistors (r) between phases with resistance that assures that the DC time constant of the generator-motor primary circuit is lower than the DC time constant of the generator-motor secondary circuit during the operation of the short-circuit device (151).

3. A variable-speed pumped storage power method applied to a variable-speed pumped storage power system (200), connected to a grid system (S) by at least one circuit breaker (101, 102, and/or 103) via a transformer (M), and provided with a doubly-fed variable-speed generator-motor (2) having a stator winding connected to a low-voltage side of the transformer (M) via a parallel-in circuit breaker (5A), a high-voltage side circuit voltage detector (104), a low-voltage side circuit voltage detector (9)
i) an AC overvoltage suppression device connected to a three-phase circuit between an AC exciter (3) and a rotor winding of the doubly-fed variable-speed generator-motor (2), and
ii) a DC overvoltage suppression device connected a DC link circuit in the AC exciter (3), respectively, and which are configured to execute short-circuiting of the connected circuits via resistors when an overvoltage has occurred in at least one of the connected circuits,
the variable-speed pumped storage power method **characterized by** comprising:
providing a DC-interruption prevention device (15) so as not to cause a DC-interruption by any of those circuit breakers upon the occurrence of a fault, wherein the DC-interruption prevention device at least comprises a short-circuit device (151), which is connected to the three-phase circuit between the rotor winding and the AC exciter (3) and is arranged to execute three-phase short-circuiting of the connected circuit; and
causing the short-circuit device (151) to execute three-phase short-circuiting by a controller (153) on a condition that at least one of an output voltage of the high-voltage side circuit voltage detector (104) and an output voltage of the low-voltage side circuit voltage detector (9) becomes lower than a respective predetermined value.

4. A variable-speed pumped storage power method according to claim 3, comprising
providing in the DC-interruption prevention device (15),
instead of the short-circuit device (151) which is capable of executing three-phase short-circuiting of the connected circuit a short-circuit device (151) which is connected to the three phase circuit between the rotor winding and the AC exciter (3) and is capable of executing three-phase short-circuiting of the connected circuit via resistors (r) between phases with resistance that assures that the DC time constant of the generator-motor primary circuit is lower than the DC time constant of the generator-motor secondary circuit during the operation of the short-circuit device (151).

## Patentansprüche

1. Drehzahlvariables Pumpspeicherkraftwerksystem (200), das durch mindestens einen Unterbrecher (101, 102 und/oder 103) über einen Transformator (M) mit einem Netzsystem (S) verbunden ist und jeweils mit einem doppelt gespeisten drehzahlvariablen Generator-Motor (2), der eine Statorwicklung aufweist, die über einen parallelen kreisinternen Unterbrecher (5A) mit einer Niederspannungsseite des Transformators (M) verbunden ist, einem Kreisspannungsdetektor (104) auf einer Hochspannungsseite, einem Kreisspannungsdetektor (9) auf einer Niederspannungsseite und
i) einer Wechselstrom-Überspannungsunterdrückungsvorrichtung, die mit einem Drehstromkreis zwischen einem Wechselstromerreger (3) und einer Rotorwicklung des doppelt gespeisten drehzahlvariablen Generator-Motors (2) verbunden ist, und/oder
ii) einer Gleichstrom-Überspannungsunterdrückungsvorrichtung versehen ist, die mit einem Wechselstromverbindungskreis in dem Wechselstromerreger (3) verbunden ist,
und die ausgestaltet sind, um ein Kurzschließen der verbundenen Kreise über Widerstände auszuführen, wenn eine Überspannung in mindestens einem von den verbundenen Kreisen aufgetreten ist, **dadurch gekennzeichnet, dass** das drehzahlvariable Pumpspeicherkraftwerksystem eine Gleichstrom-Unterbrechungsverhinderungsvorrichtung (15) zum Vermeiden einer Gleichstromunterbrechung an einem der Unterbrecher beim Auftreten eines Fehlers umfasst, wobei die Gleichstrom-Unterbrechungsverhinderungsvorrichtung mindestens umfasst:
eine Kurzschlussvorrichtung (151), die mit dem Drehstromkreis zwischen der Rotorwicklung und dem Wechselstromerreger (3) verbunden ist und eingerichtet ist, um Drehstromkurzschließen des verbundenen Kreises auszuführen; und
eine Steuereinrichtung (153), die dazu ausgestaltet ist, zu bewirken, dass die Kurzschlussvorrichtung (151) Drehstromkurzschließen unter einer Bedingung ausführt, dass mindestens eines von einer Ausgangsspannung des Kreisspannungsdetektors (104) auf der Hochspannungsseite und einer Ausgangsspannung des Kreisspannungsdetektors (9) auf der Niederspannungsseite niedriger als ein entsprechender vorbestimmter Wert wird.

2. Drehzahlvariables Pumpspeicherkraftwerksystem (200) nach Anspruch 1, wobei die Gleichstrom-Unterbrechungsverhinderungsvorrichtung (15) umfasst:
anstatt der Kurzschlussvorrichtung (151), die in der Lage ist Drehstromkurzschließen des verbundenen Kreises auszuführen, eine Kurzschlussvorrichtung (151), die mit dem Drehstromkreis zwischen der Rotorwicklung und dem Wechselstromerreger (3) verbunden ist und in der Lage ist, Drehstromkurzschließen des verbundenen Kreises über Widerstände (r) zwischen Phasen mit Widerstand auszuführen, wodurch sichergestellt wird, dass während des Betriebs der Kurzschlussvorrichtung (151) die Gleichstrom-Zeitkonstante des Generator-Motor-Hauptkreises niedriger als die Gleichstrom-Zeitkonstante des Generator-Motor-Nebenkreises ist.

3. Drehzahlvariables Pumpspeicherkraftverfahren, das auf ein drehzahlvariables Pumpspeicherkraftwerksystem (200) angewandt wird, das durch mindestens einen Unterbrecher (101, 102 und/oder 103) über einen Transformator (M) mit einem Netzsystem (S) verbunden ist und jeweils mit einem doppelt gespeisten drehzahlvariablen Generator-Motor (2), der eine Statorwicklung aufweist, die über einen parallelen kreisinternen Unterbrecher (5A) mit einer Niederspannungsseite des Transformators (M) verbunden ist, einem Kreisspannungsdetektor (104) auf der Hochspannungsseite, einem Kreisspannungsdetektor (9) auf einer Niederspannungsseite,
i) einer Wechselstrom-Überspannungsunterdrückungsvorrichtung, die mit einem Drehstromkreis zwischen einem Wechselstromerreger (3) und einer Rotorwicklung des doppelt gespeisten drehzahlvariablen Generator-Motors (2) verbunden ist, und
ii) einer Gleichstrom-Überspannungsunterdrückungsvorrichtung versehen ist, die mit einem Wechselstromverbindungskreis in dem Wechselstromerreger (3) verbunden ist,
und die ausgestaltet sind, um ein Kurzschließen der verbundenen Kreise über Widerstände auszuführen, wenn eine Überspannung in mindestens einem von den verbundenen Kreisen aufgetreten ist, wobei das drehzahlvariable Pumpspeicherkraftverfahren, **dadurch gekennzeichnet ist, dass** es umfasst:
Bereitstellen einer Gleichstrom-Unterbrechungsverhinderungsvorrichtung (15), derart, dass beim Auftreten eines Fehlers keine Gleichstromunterbrechung durch einen beliebigen von jenen Unterbrechern verursacht wird, wobei die Gleichstrom-Unterbrechungsverhinderungsvorrichtung mindestens eine Kurzschlussvorrichtung (151) umfasst, die mit dem Drehstromkreis zwischen der Rotorwicklung und dem Wechselstromerreger (3) verbunden ist und eingerichtet ist, um Drehstromkurzschließen der verbundenen Schaltung auszuführen; und
Bewirken, dass die Kurzschlussvorrichtung (151) Drehstromkurzschließen durch eine Steuereinrichtung (153) unter einer Bedingung ausführt, dass mindestens eines von einer Ausgangsspannung des Kreisspannungsdetektors (104) auf der Hochspannungsseite und einer Ausgangsspannung des Kreisspannungsdetektors (9) auf der Niederspannungsseite niedriger als ein entsprechender vorbestimmter Wert wird.

4. Drehzahlvariables Pumpspeicherkraftverfahren nach Anspruch 3, das das Bereitstellen, in der Gleichstrom-Unterbrechungsverhinderungsvorrichtung (15), anstatt der Kurzschlussvorrichtung (151), die in der Lage ist, Drehstromkurzschließen des verbundenen Kreises auszuführen, einer Kurzschlussvorrichtung (151) umfasst, die mit dem Drehstromkreis zwischen der Rotorwicklung und dem Wechselstromerreger (3) verbunden ist und in der Lage ist, Drehstromkurzschließen des verbundenen Kreises über Widerstände (r) zwischen Phasen mit Widerstand auszuführen, wodurch sicherstellt wird, dass während des Betriebs der Kurzschlussvorrichtung (151) die Gleichstrom-Zeitkonstante des Generator-Motor-Hauptkreises niedriger ist als die Gleichstrom-Zeitkonstante des Generator-Motor-Nebenkreises.

## Revendications

1. Système d'alimentation de stockage par pompage à vitesse variable (200) relié à un système de réseau électrique (S) par au moins un disjoncteur (101, 102, et/ou 103) via un transformateur (M), et pourvu d'un générateur-moteur à double alimentation et à vitesse variable (2) ayant un enroulement de stator relié à un côté à basse tension du transformateur (M) via un disjoncteur d'entrée parallèle (5A), un détecteur de tension de circuit de côté à haute tension (104), un détecteur de tension de circuit de côté à basse tension (9) et respectivement
i) un dispositif de suppression de surtension CA relié à un circuit triphasé entre un excitateur CA (3) et un enroulement de rotor du générateur-moteur à double alimentation et à vitesse variable (2), et/ou
ii) un dispositif de suppression de surtension CC relié à un circuit de liaison CC dans l'excitateur CA (3),
et qui sont configurés pour exécuter un court-circuitage des circuits reliés via des résistances lorsqu'une surtension s'est produite dans au moins l'un parmi les circuits reliés,
**caractérisé en ce que** le système d'alimentation de stockage par pompage à vitesse variable comprend un dispositif de prévention d'interruption CC (15) de manière à éviter une interruption CC à l'un quelconque desdits disjoncteurs lorsqu'un défaut survient, dans lequel le dispositif de prévention d'interruption CC comprend au moins :
un dispositif de court-circuit (151) qui est relié au circuit triphasé entre l'enroulement de rotor et l'excitateur CA (3) et est agencé pour exécuter un court-circuitage triphasé du circuit relié ; et
un organe de commande (153) configuré pour amener le dispositif de court-circuit (151) à exécuter un court-circuitage triphasé à condition qu'au moins l'une parmi une tension de sortie du détecteur de tension de circuit de côté à haute tension (104) et une tension de sortie du détecteur de tension de circuit de côté à basse tension (9) devienne inférieure à une valeur prédéterminée respective.

2. Système d'alimentation de stockage par pompage à vitesse variable (200) selon la revendication 1, dans lequel le dispositif de prévention d'interruption CC (15) comprend
au lieu du dispositif de court-circuit (151) qui est capable d'exécuter un court-circuitage triphasé du circuit relié, un dispositif de court-circuit (151) qui est relié au circuit triphasé entre l'enroulement de rotor et l'excitateur CA (3) et est capable d'exécuter un court-circuitage triphasé du circuit relié via des résistances (r) entre des phases avec une résistance qui assure que la constante de temps CC du circuit primaire du générateur-moteur soit inférieure à la constante de temps CC du circuit secondaire du générateur-moteur au cours du fonctionnement du dispositif de court-circuit (151).

3. Procédé d'alimentation de stockage par pompage à vitesse variable appliqué à un système d'alimentation de stockage par pompage à vitesse variable (200) relié à un système de réseau électrique (S) par au moins un disjoncteur (101, 102, et/ou 103) via un transformateur (M), et pourvu d'un générateur-moteur à double alimentation et à vitesse variable (2) ayant un enroulement de stator relié à un côté à basse tension du transformateur (M) via un disjoncteur d'entrée parallèle (5A), un détecteur de tension de circuit de côté à haute tension (104), un détecteur de tension de circuit de côté à basse tension (9) et respectivement
i) un dispositif de suppression de surtension CA relié à un circuit triphasé entre un excitateur CA (3) et un enroulement de rotor du générateur-moteur à double alimentation et à vitesse variable (2), et
ii) un dispositif de suppression de surtension CC relié à un circuit de liaison CC dans l'excitateur CA (3),
et qui sont configurés pour exécuter un court-circuitage des circuits reliés via des résistances lorsqu'une surtension s'est produite dans au moins l'un parmi les circuits reliés,
le procédé d'alimentation de stockage par pompage à vitesse variable étant **caractérisé en ce qu'**il comprend :
la fourniture d'un dispositif de prévention d'interruption CC (15) de manière à ne pas provoquer une interruption CC par l'un quelconque de ces disjoncteurs lorsqu'un défaut survient, dans lequel le dispositif de prévention d'interruption CC comprend au moins un dispositif de court-circuit (151) qui est relié au circuit triphasé entre l'enroulement de rotor et l'excitateur CA (3) et est agencé pour exécuter un court-circuitage triphasé du circuit relié ; et
amener le dispositif de court-circuit (151) à exécuter un court-circuitage triphasé par un organe de commande (153) à condition qu'au moins l'une parmi une tension de sortie du détecteur de tension de circuit de côté à haute tension (104) et une tension de sortie du détecteur de tension de circuit de côté à basse tension (9) devienne inférieure à une valeur prédéterminée respective.

4. Procédé d'alimentation de stockage par pompage à vitesse variable selon la revendication 3, comprenant
la fourniture, dans le dispositif de prévention d'interruption CC (15), au lieu du dispositif de court-circuit (151) qui est capable d'exécuter un court-circuitage triphasé du circuit relié, d'un dispositif de court-circuit (151) qui est relié au circuit triphasé entre l'enroulement de rotor et l'excitateur CA (3) et est capable d'exécuter un court-circuitage triphasé du circuit relié via des résistances (r) entre des phases avec une résistance qui assure que la constante de temps CC du circuit primaire du générateur-moteur soit inférieure à la constante de temps CC du circuit secondaire du générateur-moteur au cours du fonctionnement du dispositif de court-circuit (151).
